# EUROPEAN PATENT SPECIFICATION

(11) **EP 1 682 341 B1**
(45) Date of publication and mention of the grant of the patent: **06.07.2016**
(21) Application number: 04798353.1
(22) Date of filing: 01.11.2004
(51) Int. Cl.: B32B 3/20, B32B 15/08

(54) **IMPROVED STRUCTURAL SANDWICH PLATE MEMBERS WITH FORMS**
VERBESSERTE STRUKTURELLE VERBUNDPLATTENGLIEDER MIT FORMEN
ELEMENTS STRUCTURELS AMELIORES DU TYPE PLAQUE SANDWICH COMPRENANT DES FORMES

(30) Priority: 14.11.2003 GB 0326608
(43) Date of publication of application: 26.07.2006
(73) Proprietor: Intelligent Engineering (Bahamas) Limited, Nassau (BS)
(72) Inventor: KENNEDY, Stephen, John, Ottawa, Ontario K17 0N2 (CA)
(74) Representative: Leeming, John Gerard
(86) International application number: PCT/GB2004/004622
(87) International publication number: WO 2005/051645

(56) References cited:
- WO-A-03/080330
- DE-A- 2 444 737
- DE-A- 2 554 890
- DE-A- 3 816 517
- DE-A- 19 939 513
- GB-A- 1 070 874
- GB-A- 2 374 038
- US-A- 5 251 414
- PATENT ABSTRACTS OF JAPAN vol. 003, no. 152 (C-067), 14 December 1979 (1979-12-14) & JP 54 129079 A (HITACHI LTD), 6 October 1979 (1979-10-06)

## Description

The present invention relates to structural sandwich plate members which comprise two outer plates and a core of plastics or polymer material bonded to the outer plates with sufficient strength to substantially contribute to the structural strength of the member.

Structural sandwich plate members are described in US 5,778, 813 and US 6,050, 208, which documents are hereby incorporated by reference, and comprise outer metal, e. g. steel, plates bonded together with an intermediate elastomer core, e. g. of unfoamed polyurethane.

These sandwich plate systems may be used in many forms of construction to replace stiffened steel plates or formed steel plates and greatly simplify the resultant structures, improving strength and structural performance (e. g. stiffness, damping characteristics) while saving weight. Further developments of these structural sandwich plate members are described in WO 01/32414, also incorporated hereby by reference. As described therein, foam forms may be incorporated in the core layer to reduce weight and transverse metal sheer plates may be added to improve stiffness.

According to the teachings of WO 01/32414 the foam forms can be either hollow or solid. Hollow forms generate a greater weight reduction and are therefore advantageous. The forms described in that document are not confined to being made of light weight foam material and can also be make of other materials such as wood or steel boxes.

International Patent Application WO 02/078948 is a further development of the concept of including hollow forms and describes forms that are easy to manufacture and assemble, in particular hollow elongate forms made from snap-together pieces are described. GB 2 374 038 A, priority from which is claimed in WO 02/078948, suggests the use of spherical members but without giving any practical details, e. g. sizes or materials for the spheres.

In WO 01/32414 and WO 02/078948 the elongate forms are sized according to the plate member being made. Thus, the techniques disclosed in these two documents are most applicable where a large number of identical plate members are to be made so that the forms can be economically mass-produced, e. g. by moulding. If a small number of plates of a given size or shape are to be made, the forms will need to be handmade or adapted at relatively great expense.

DE 2554890 A discloses a cellular material and a method for manufacturing it. Spherical bodies are placed in a mould then the interstices are filled with a material such as cement, gypsum, lime or glue.

US 5,251,414 discloses a reinforcing structure useful in the formation of an energy absorbing composite suitable for use for a motor vehicle body panel. Particulate reinforcing members are included in a polymer matrix with at least one undulating reinforcing sheet member.

It is an aim of the present invention to provide structural sandwich plate members with forms or inserts that can be readily adapted to different sizes and/or shapes of plate.

According to the present invention, there is provided a structural sandwich plate member and a method of manufacturing a structural sandwich plate member as defined in the appended claims.

The term "principal dimensions" is intended to refer to the diameter of a sphere, the major and minor diameters of an ovoid, the length, depth and breadth of a cuboid, etc.. In the case of irregular shapes, the principal dimensions may be regarded as the dimensions of the smallest rectangular box in which the shape will fit.

By using forms that are comparable in dimensions to the gap between the metal layers, and hence relatively small compared to the lateral dimension (length and/or width) of the plate member, any shape of plate can be manufactured using standard mass-produced forms, without the need for hand adaptation. The exact shape of the form is not crucial in many cases, though additional advantages can be obtained with specific shapes. It is required that the forms do not tesselate so that there are spaces between them for the core material which bonds to the outer plates. The shape and arrangement of the forms can be varied to vary the proportion of the volume between the outer plates that is occupied by core material.

The forms may be arranged in a single layer or multiple layers. In the case of multiple layers, it is preferred in some applications that the forms of one layer directly overly the forms of the layer below so that there are parts of the core material extending perpendicularly between the outer metal layers. Where there are multiple layers of forms, an interlayer may be provided between the layers of forms. The layer may be made of a high tensile strength material such as metal, a high tensile strength fabric, such as Kevlar (TM) or Spectra (rA4), fibre reinforced plastic, other suitable fabrics, mesh or ceramic sheets to improve the blast and/or ballistic resistance of the plate member. The layer may be perforated or shaped to allow flow of core material throughout the core during fabrication and to enhance the shear strength between the layers. The layer may also be used to assist the placing of the forms-e. g. to determine the spacing between layers or the relative positions of the forms in different layers-and thereby enhance the performance of the plate member.

A particularly preferred form is a spherical hollow ball having a diameter substantially equal to 1/N of the distance between said outer metal layers, N being a natural number between 1 and 5. The balls may for example have a diameter in the range of from 20 to 100mm and can be used in single or multiple layers in plate members with core thicknesses in the range of from 20 to 100mm. Balls made of polypropylene are particularly suitable and may be solid or preferably hollow with a solid skin. Solid balls provide less weight reduction but may still be advantageous as they are cheaper than the elastomers preferred as the core material. Such balls are widely available and cheap to manufacture.

The forms may also be provided with a plurality of protrusions so as to increase the spacing between the forms, and hence the proportion of the core cavity occupied by core material. The protrusions may also be arranged to determine the relative shapes and positions adopted by adjacent forms and hence the shape of the void space that is filled by core material, e.. g. to ensure a continuous mass of core material.

A mesh, e. g of wire, may be used to assist the placing of the forms and space them apart from each other and/or from the metal layers.

The materials, dimensions and general properties of the outer plates of the structural sandwich plate member of the invention may be chosen as desired for the particular use to which the structural sandwich plate member is to be put and in general may be as described in US-5,778, 813 and US-6,050, 208. Steel or stainless steel is commonly used in thicknesses of 0.5 to 20mm and aluminium may be used where light weight is desirable. Aluminium in general may be used in thicknesses 2 to 4 times that of steel, i. e. 1 to 50mm, to give comparable strength. Similarly, the plastics or polymer core may be any suitable material, for example an elastomer such as polyurethane, as described in US-5,778, 813 and US-6,050, 208.

The present invention will be described below with reference to exemplary embodiments and the accompanying schematic drawings, in which:
Figure 1 is a cross-sectional view of a structural sandwich plate member according to a first embodiment of the present invention;
Figure 2 is a cross-sectional view of the structural sandwich plate member of Figure 1 along the line A-A;
Figure 3 is a cross-sectional view similar to Figure 2 of a structural sandwich plate member according to a variant of the first embodiment of the present invention;
Figure 4 is a cross-sectional view of a structural sandwich plate member according to a second embodiment of the present invention;
Figure 5 is a cross-sectional view of a structural sandwich plate member according to a third embodiment of the present invention;
Figure 6 is a cross-sectional view of a structural sandwich plate member according to a fourth embodiment of the present invention; and
Figure 7 is a cross-sectional view of a structural sandwich plate member according to a fifth embodiment of the present invention;

In the various drawings, like parts are indicated by like reference numerals.

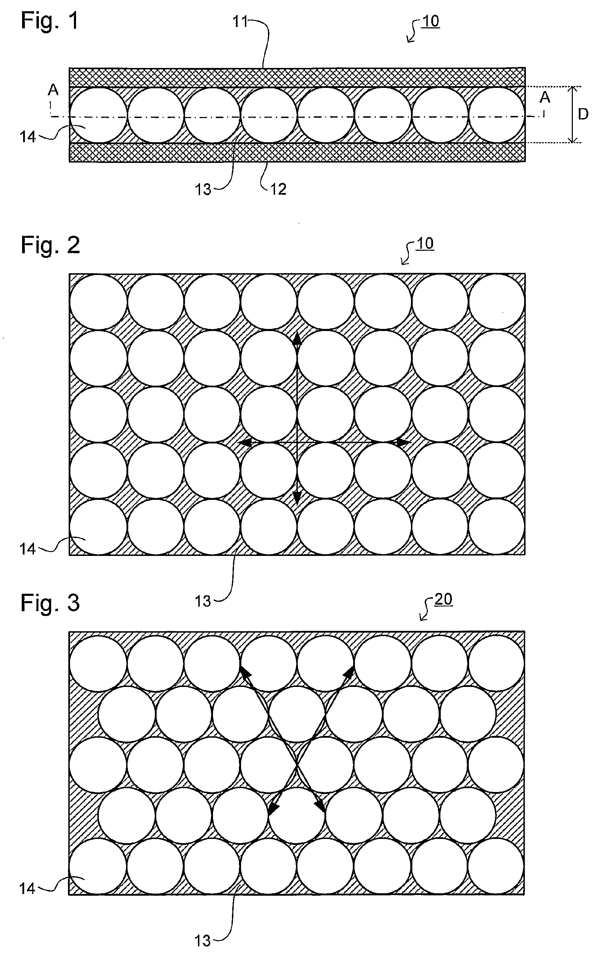

The structural sandwich plate member shown in Figure 1 comprises upper and lower outer plates (face plates) 11, 12 which may be of steel (e.g. of thickness in the range of from 0.5 to 20mm) or aluminium (e.g. of thickness in the range of 1 to 50mm). Edge plates (not shown) are welded between the face plates 11, 12 around their outer peripheries to form a closed cavity. Alternatively, the plate member may be assembled in a mould, obviating the need for edge plates. In the cavity between the face plates 11, 12 is a core 13 of plastics or polymer material, preferably a thermosetting material such as polyurethane elastomer. This core may have a thickness in the range of from 15 to 200mm; in the present application 50mm is suitable. The core 13 is bonded to the face plates 11, 12 with sufficient strength and has sufficient mechanical properties to transfer shear forces expected in use between the two face plates. It is preferably compact. The bond strength between the core 13 and face plates 11, 12 should be greater than 3MPa, preferably 6MPa, and the modulus of elasticity of the core material should be greater than 200MPa, preferably 250MPa. A lower modulus may be used where high temperature conditions will not be experienced. For low load applications, such as floor panels, where the typical use and occupancy loads are of the order of 1.4kPa to 7.2kPa, the bond strength may be lower, *e.g.* approximately 1MPa. By virtue of the core layer, the structural sandwich plate member has a strength and load bearing capacity of a stiffened steel plate having a substantially greater plate thickness and significant additional stiffening. The plate, of course, need not be flat but may take any form required for its intended use.

To reduce the weight of the plate member, a plurality of lightweight forms 14 are provided in the core. In this embodiment, the forms 14 comprise hollow, solid skin polypropylene balls having a diameter substantially equal to the distance D between the outer plates 11, 12. As shown in Figure 2, which is a cross-section along the line A-A in Figure 1, the balls 14 are arranged in orthogonal rows and columns so that substantial gaps are left between them. This arrangement of forms is particularly appropriate where the major loads in use are directed along the lateral and longitudinal directions, indicated by arrows in Figure 2. These gaps fill with core material which bonds the outer metal plates together. Because of the curvature of the balls, the core material forms column-like structures extending directly between the outer plates and bonded to the plates over a wide area. Thus the bond strength compared to a solid core is reduced by no more than about 5% and the shear transfer capability is maintained.

The balls 14 may also be closely packed in a hexagonal array, as shown in Figure 3. This results in a lighter plate member 20 as the proportion of the core cavity that is occupied by the core material 133 is reduced. The plate member is also particularly suited to applications in which the major loads will lie on oblique directions, as indicated by arrows in Figure 3.

To manufacture the structural sandwich plate member 10, the edge plates are welded around the periphery of lower faceplate 12 and then the balls 14 are placed in the resulting open cavity. At this stage, any precast sections of the core may be put in place as well as any shear plates or other fittings that may be desired. Then, the upper faceplate 11 is welded to the edge plates to form a closed cavity and the plastics or polymer material injected to form core 13. The injected material is then allowed to cure and the injection ports used in the injection step ground off and sealed along with the vent holes. These steps may be performed in situ, or off-site in factory conditions and the finished panel transported to the installation site. Prior to the injection of the core, the balls 13 help to support the upper faceplate 11 so that larger plate members may be manufactured without sagging and without the need for internal supports.

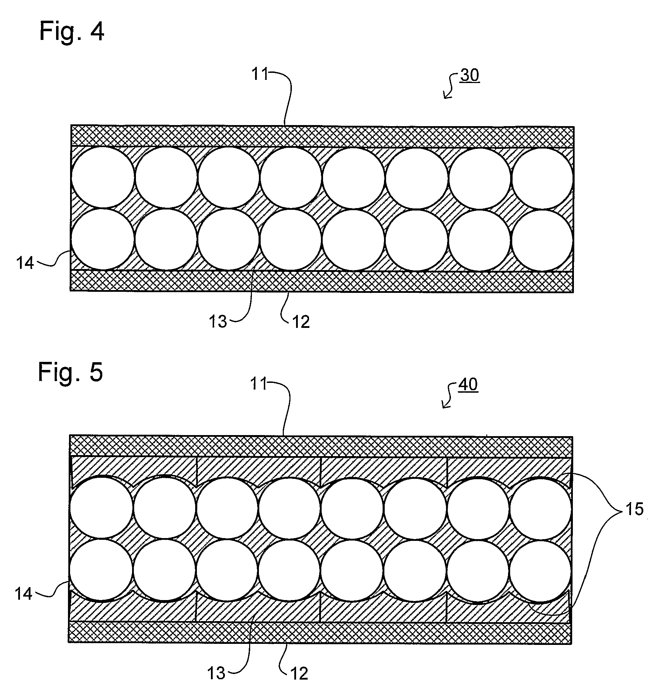

A second embodiment of the present invention is shown in Figure 4. The structural sandwich plate member 30 according to the second embodiment of the invention is similar to the first embodiment but includes two layers of balls 14. This enables a thicker plate member to be made without increasing the spacing of the column-like structures of the core. Preferably, as shown, the balls of one layer overly the balls of the other layer but in lower load applications the balls may be close packed in the vertical direction as well as in the horizontal direction. Of course three or more layers of forms may be provided and the different layers of forms need not all be the same, however it is preferred that there are 5 or fewer layers.

Figure 5 illustrates a third embodiment of the present invention. This includes a mesh 15 above and below the layers of balls to space them away from the outer metal plates to increase the bond area between core and the plates. The presence of a solid layer of core material adjacent the metal plates 11,12 also improves curing and ensures a more uniform impact resistance across the area of the plate member. The mesh may be a simple wire mesh that is moulded by hand to the desired shape. Mesh may also be provided between layers of balls and may serve to assist placement of the balls and to space them apart from each other.

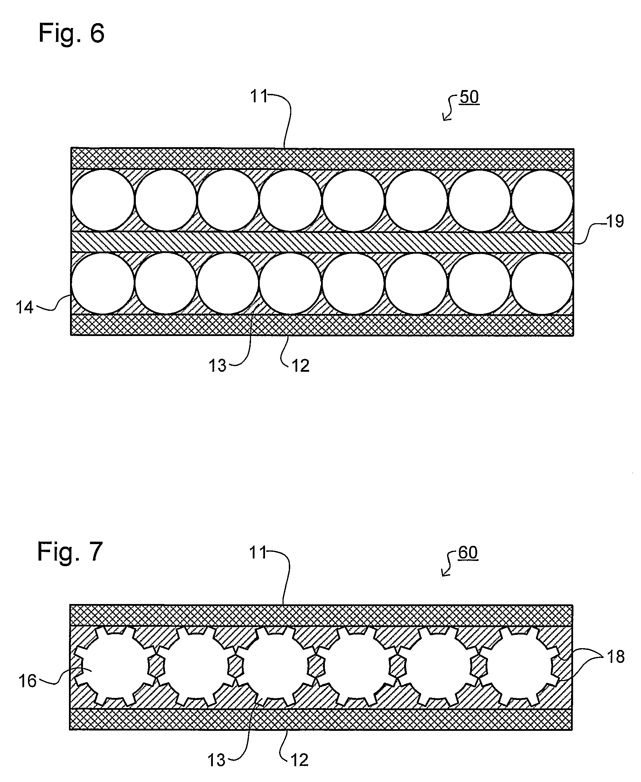

A fourth embodiment of the invention is shown in Figure 6. In addition to the two layers of forms 14, as provided in the second embodiment, the plate member 50 of the fourth embodiment includes an interlayer 19 provided between the layers of forms. The interlayer 19 may take a variety of forms for a variety of different purposes. For improved blast and/or ballistics protection, the interlayer 19 may be made of a high tensile strength material such as metal, a high tensile strength fabric, such as Kevlar(TM) or Spectra(TM), fibre reinforced plastic, other suitable fabrics, mesh or ceramic sheets. Suitable materials and forms of the interlayer for this purpose are described in copending British patent application number 0326609.5 (Agent's ref N.88882) entitled "IMPROVED STRUCTURAL SANDWICH PLATE MEMBERS" and filed on 14 November 2003. The whole contents of this document are incorporated by reference. The interlayer may also be shaped so as to assist or determine the placing of the forms - e.g. their spacing, orientation or the relative positions of the different layers - and if that is the sole purpose of the interlayer it may be made of the same material as the core or a cheaper material, especially if a mesh.

An alternative approach to increasing the spacing between the balls, is to provide them with projections, as shown in Figure 7. This shows plate member 60 according to a fifth embodiment of the invention, which is generally the same as the first embodiment, save that the balls 16 are provided with a plurality of projections 18 around their surfaces. The projections 18 serve to increase the ball to ball spacing as well as the ball to metal plate spacing, increasing the bond strength of the core to the metal plates and the shear transfer capacity.

Depending on the intended use of the plate member, various of its properties may be enhanced by the use of different materials for the lightweight forms 14, 16 and by the provision of different fillings for the forms. For example, the forms 14, 16 may be made of metal, ceramic, Kevlar or other high-strength materials to increase the blast and ballistic resistance of the plate member and also to improve shrapnel capture and fragmentation resistance. This may provide particular advantages if an interlayer as described above is also provided for increased blast and ballistics resistance. To increase fire resistance, the forms may also be made of metal or ceramic and may be filled with inert or fire-retardant materials. Other gas or liquid fillings may also be used to improve the acoustic and/or thermal insulation properties of the metal plate. The forms may for the same reason be evacuated.

It will be appreciated that the above description is not intended to be limiting and that other modifications and variations fall within the scope of the present invention, which is defined by the appended claims. For example, whilst in the described embodiments all the forms are the same, it will be appreciated that mixtures of different shapes and/or sizes of form may also be used.

## Claims

1. A structural sandwich plate member comprising:
first and second outer plates made of metal and having a thickness greater than or equal to 0.5mm;
a core of compact polyurethane elastomer bonded to said outer plates with sufficient strength to transfer shear forces therebetween and having a thickness greater than or equal to 20mm; and
a plurality of lightweight forms within the core; **characterised in that**
said forms are hollow spheres having a diameter equal to the thickness of the core which are closely packed in a single layer.

2. A structural sandwich plate member according to claim 1 wherein said forms have a diameter less than or equal to 100mm.

3. A structural sandwich plate member according to claim 1 or 2 wherein said forms are made of polypropylene and have a solid skin.

4. A structural sandwich plate member according to claim 1 or 2 wherein said forms are made of metal, ceramic, or a high tensile strength fabric.

5. A structural sandwich plate member according to any one of the preceding claims wherein said forms are filled with an inert gas, a fire retardant substance, a thermal or acoustic insulating fluid or a partial vacuum.

6. A structural sandwich plate member according to any one of the preceding claims further comprising a mesh, to assist the placing of the forms and space them apart from each other and/or from the outer plates.

7. A method of manufacturing a structural sandwich plate member comprising the steps of:
providing first and second outer plates in a spaced-apart relationship and a plurality of lightweight forms within the space between said plates;
injecting uncured polyurethane elastomer to fill the space defined between said outer plates and around said plurality of forms; and
allowing said elastomer to cure without foaming to bond said outer plates together with sufficient strength to transfer shear forces therebetween; wherein
said outer plates are made of metal, are spaced apart by a distance greater than or equal to 20mm and having a thickness greater than or equal to 0.5mm;
said forms are hollow spheres having a diameter equal to the distance between said outer plates and closely packed in a single layer.

## Patentansprüche

1. Sandwichplattenbauelement, umfassend:
erste und zweite äußere Platten, die aus Metall hergestellt sind und eine Dicke größer oder gleich 0,5 mm aufweisen;
einen Kern aus kompaktem Polyurethanelastomer, der an die äußeren Platten mit ausreichender Festigkeit angeklebt ist, um Scherkräfte dazwischen zu übertragen, und der eine Dicke größer oder gleich 20 mm aufweist; und
mehrere leichte Formen innerhalb des Kerns; **dadurch gekennzeichnet, dass**
die Formen Hohlkugeln mit einem Durchmesser gleich der Dicke des Kerns sind, die dicht in eine einzelne Schicht gepackt sind.

2. Sandwichplattenbauelement nach Anspruch 1, wobei die Formen einen Durchmesser kleiner oder gleich 100 mm aufweisen.

3. Sandwichplattenbauelement nach Anspruch 1 oder 2, wobei die Formen aus Polypropylen hergestellt sind und eine feste Haut aufweisen.

4. Sandwichplattenbauelement nach Anspruch 1 oder 2, wobei die Formen aus Metall, Keramik oder einem Gewebe mit hoher Zugfestigkeit hergestellt sind.

5. Sandwichplattenbauelement nach einem der vorstehenden Ansprüche, wobei die Formen mit einem Inertgas, einer feuerhemmenden Substanz, einer thermisch oder akustisch isolierenden Flüssigkeit oder einem Teilvakuum gefüllt sind.

6. Sandwichplattenbauelement nach einem der vorstehenden Ansprüche weiter umfassend ein Geflecht, um das Anordnen der Formen zu unterstützen und sie voneinander und/oder von den äußeren Platten zu beabstanden.

7. Verfahren zur Herstellung eines Sandwichplattenbauelements, das die Schritte umfasst:
Bereitstellen erster und zweiter äußerer Platten in einer beabstandeten Beziehung und mehrere leichte Formen innerhalb des Raums zwischen den Platten;
Einspritzen ungehärteten Polyurethanelastomers, um den Raum zu füllen, der zwischen den äußeren Platten und um die mehreren Formen herum definiert ist; und
Aushärten lassen des Elastomers ohne aufzuschäumen, um die äußeren Platten mit ausreichender Festigkeit zusammenzukleben, um Scherkräfte dazwischen zu übertragen; wobei
die äußeren Platten aus Metall hergestellt sind, durch einen Abstand größer oder gleich 20 mm beabstandet sind und eine Dicke größer oder gleich 0,5 mm aufweisen;
wobei die Formen Hohlkugeln mit einem Durchmesser gleich dem Abstand zwischen den äußeren Platten sind und dicht in eine einzelne Schicht gepackt sind.

## Revendications

1. Élément structurel de plaque en sandwich comprenant :
des première et deuxième plaques externes en métal d'une épaisseur supérieure ou égale à 0,5 mm ;
une partie centrale en élastomère de polyuréthane fixée auxdites plaques externes avec une résistance suffisante pour transférer les forces de cisaillement entre celles-ci et d'une épaisseur supérieure ou égale à 20 mm ; et
une pluralité de formes légères incluses dans la partie centrale ; **caractérisé en ce que**
lesdites formes sont des sphères creuses d'un diamètre égal à l'épaisseur de la partie centrale et qui sont en contact étroit dans une couche unique.

2. Élément structurel de plaque en sandwich selon la revendication 1, où lesdites formes ont un diamètre inférieur ou égal à 100 mm.

3. Élément structurel de plaque en sandwich selon la revendication 1 ou 2, où lesdites formes sont en polypropylène et possèdent une peau solide.

4. Élément structurel de plaque en sandwich selon la revendication 1 ou 2, où lesdites formes sont en métal, en céramique ou en tissu à grande résistance à la traction.

5. Élément structurel de plaque en sandwich selon l'une quelconque des revendications précédentes, où lesdites formes sont remplies d'un gaz inerte, d'une substance ignifuge, d'un fluide d'isolation thermique ou acoustique ou d'un vide partiel.

6. Élément structurel de plaque en sandwich selon l'une quelconque des revendications précédentes, comprenant en outre un maillage, pour faciliter la mise en place des formes et les espacer les unes des autres et/ou des plaques externes.

7. Procédé de fabrication d'un élément structurel de plaque en sandwich comprenant les étapes consistant à :
fournir des première et deuxième plaques externes espacées l'une de l'autre et une pluralité de formes légères dans l'espace séparant lesdites plaques ;
injecter un élastomère de polyuréthane non durci pour remplir l'espace défini entre lesdites plaques externes et autour de ladite pluralité de formes ; et
laisser ledit élastomère durcir sans former de mousse pour fixer lesdites plaques externes l'une à l'autre avec une résistance suffisante pour transférer les forces de cisaillement entre elles ;
lesdites plaques externes étant en métal, en étant espacées d'une distance supérieure ou égale à 20 mm, en présentant une épaisseur supérieure ou égale à 0,5 mm ;
lesdites formes étant des sphères creuses d'un diamètre égal à la distance séparant lesdites plaques externes et étant en contact étroit dans une couche unique.
